# EUROPÄISCHE PATENTANMELDUNG

(11) **EP 2 011 381 A1**
(43) Veröffentlichungstag der Anmeldung: **07.01.2009**
(21) Anmeldenummer: 08009122.6
(22) Anmeldetag: 16.05.2008
(51) Int. Cl.: A01C 7/08

(54) **Pneumatische Verteilmaschine**

(30) Priorität: 06.07.2007 DE 102007031575
(71) Anmelder: Amazonen-Werke H. Dreyer GmbH & Co. KG, 49205 Hasbergen (DE)
(72) Erfinder: Tiessen, Reimer Uwe, 26135 Oldenburg (DE); Pokriefke, Michael, 27798 Hude (DE)

(57) **Zusammenfassung**

Pneumatische Verteilmaschine mit einem Rahmen, Vorratsbehälter, dem Vorratsbehälter zugeordneten Dosiervorrichtungen, die das sich im Vorratsbehälter befindliche auszubringende Material in pneumatisch beaufschlagte und zu auf aufrecht stehend angeordneten Steigrohren angeordneten Verteiler führende Förderleitungen einspeisen, wobei die Steigrohre mit dem Verteiler auf Tragbalken der Verteilmaschine um eine quer zur Fahrtrichtung verlaufende Achse verschwenkbar angeordnet sind, wobei von den Verteilern Verteilerleitungen zu an Querbalken angeordneten Materialablageeinrichtungen führen. Um in einfacher Weise die Verteiler so anzuordnen und ihrer Anordnung derart auszugestalten, dass sie zu Wartungsarbeiten leicht erreichbar sind, ist vorgesehen, dass das Steigrohr mit den Verteilern derart verschwenkbar ist, dass sich zumindest der Verteiler in Fahrtrichtung gesehen zumindest teilweise sich im hinteren Bereich der Materialablageeinrichtungen und/oder hinter den Materialablageeinrichtungen befindet und/oder von einem hinter dem Materialablageeinrichtungen stehenden Person erreichbar ist.

## Beschreibung

Die Erfindung betrifft eine pneumatische Verteilmaschine gemäß des Oberbegriffes des Patentanspruches 1.

Eine derartige pneumatische Verteilmaschine ist durch die DE 37 51 912 T2 bekannt. Diese Verteilmaschine weist einen auf einem Rahmen angeordneten Vorratsbehälter auf. Hinter dem Vorratsbehälter ist ein geteilter Scharbalken angeordnet. Auf jedem Scharbalken ist ein Steigrohr mit einem daran sich anschließenden als Verteilerkopf ausgebildeten Verteiler angeordnet. An dem Scharbalken sind Säschare angeordnet. Von den Abgängen des Verteilerkopfes führen Ausbringleitungen zu den Säscharen. Um die Sämaschine, die bei sich in Arbeitsstellung befindlichen Scharbalken eine Arbeitsbreite von größer als 3m aufweist, auf eine Transportbreite unter 3m zu bringen, werden die Scharbalken mit den Steigrohren und den daran angeordneten Verteilern um in Fahrtrichtung verlaufende Achsen aus ihrer waagerecht verlaufenden Arbeitsposition in eine senkrechte Transportposition eingeklappt. Um dieses zu ermöglichen und damit die Steigrohre mit den Verteilern nicht miteinander oder mit den gegenüberliegenden Scharbalken kollidieren, werden die Steigrohre mit den Verteilern um eine in Fahrtrichtung verlaufende Achse nach vorn verschwenkt.

Bei den heute zum Einsatz kommenden pneumatischen Verteilmaschine sind die einzelnen Verteilerköpfe ausgebildeten Verteiler auf den Steigrohren in einer Höhe von über 2 m angeordnet, so dass sie zur Wartung schwer zu erreichen sind. Weiterhin befinden sie sich in einem relativ großen Abstand vom hinteren Ende der Materialablagereinrichtungen und sind somit nur schwer zu erreichen.

Der Erfindung liegt die Aufgabe zugrunde, in einfacher Weise die Verteiler so anzuordnen und in ihrer Anordnung derart auszugestalten, dass sie zu Wartungsarbeiten leicht erreichbar sind.

Diese Aufgabe wird erfindungsgemäß dadurch gelöst, dass das Steigrohr mit den Verteilern derart verschwenkbar ist, dass sich zumindest der Verteiler in Fahrtrichtung gesehen zumindest teilweise sich im hinteren Bereich der Materialablageeinrichtungen und/oder hinter den Materialablageeinrichtungen befindet und/oder von einem hinter den Materialablageeinrichtungen stehenden Person erreichbar ist.

Infolge dieser Maßnahme kann das Steigrohr in eine Position nach hinten unten verschwenkt werden, in welcher der Verteilerkopf für Wartungsarbeiten in vorteilhafter Weise einfach erreichbar ist.

Diese leichte Erreichbarkeit wird in einfacher Weise dadurch sichergestellt, dass der Verteiler mit dem Steigrohr auf eine maximale Höhe von 2 m zum Boden nach hinten und unten verschwenkbar ist.

Ein einfaches Verbringen des Steigrohres mit dem Verteiler in die Wartungsposition lässt sich dadurch erreichen, dass das Steigrohr mit dem Verteiler mit einem motorischen Stellelement verschwenkbar ist.

Weitere Einzelheiten der Erfindung sind der Beispielsbeschreibung und den Zeichnungen zu entnehmen. Hierbei zeigen
- Fig. 1: die pneumatische Verteilmaschine mit in Arbeitsstellung sich befindlichen Steigrohren mit Verteilerköpfen in perspektivischer Darstellung,
- Fig. 2: die Verteilmaschine gemäß Fig. 1 in Seitenansicht,
- Fig. 3: die pneumatische Verteilmaschine mit in Wartungsstellung sich befindlichen Steigrohren mit Verteilerköpfen in perspektivischer Darstellung und
- Fig. 4: die Verteilmaschine gemäß Fig. 3 in Seitenansicht.

Die pneumatische Verteilmaschine weist den Rahmen 1 auf, der sich auf seiner Vorderseite über die Ankupplungseinrichtung 2 an einer Zugeinrichtung eines Schleppers und auf der Rückseite auf den Laufrädern 3 auf dem Boden abstützt. In dem vorderen Bereich des Rahmens 1 ist die Vorratsbehältereinheit angeordnet. An der Rückseite des Rahmens 1 ist mittels einer Kupplungseinrichtung 5 ein Tragbalken 6, der zweigeteilt ausgebildet ist, angeordnet.

An dem Tragbalken 6 sind in drei Querreihen hintereinander und quer zur Fahrtrichtung 7 beabstandet zueinander als Säschare 8 ausgebildete Materialablageeinrichtungen angeordnet.

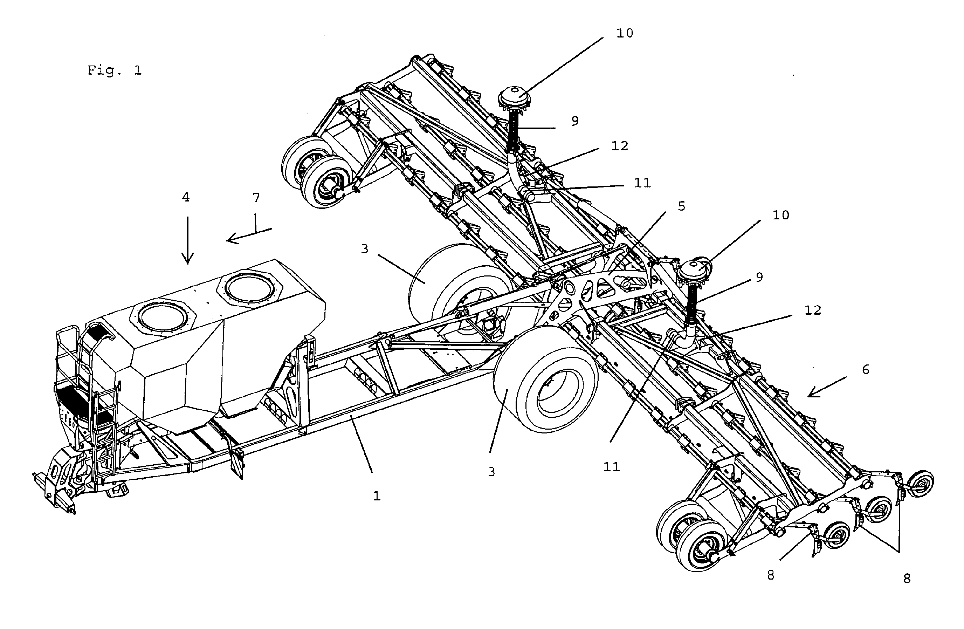

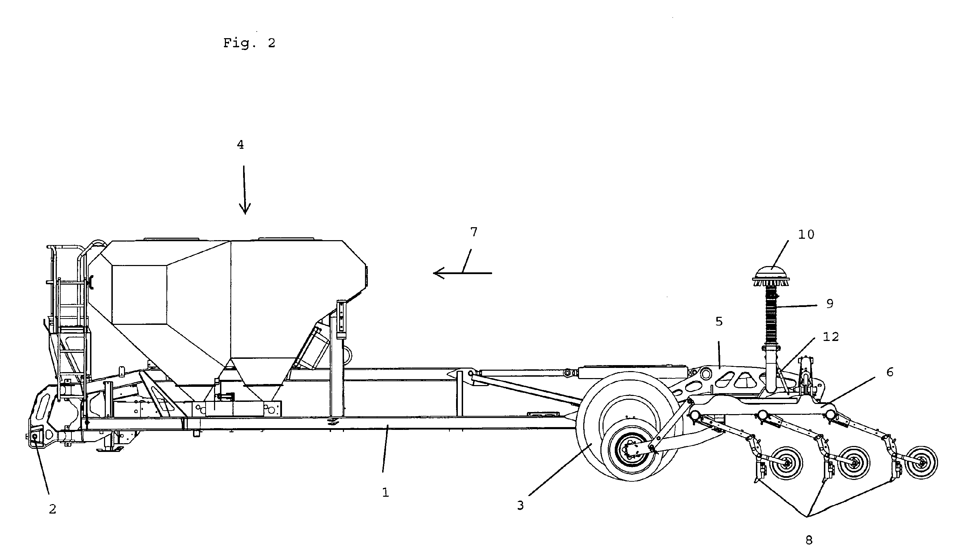

Der Vorratsbehältereinheit 4 sind nicht dargestellte Dosiereinrichtungen zugeordnet. Die Dosiereinrichtungen speisen in nicht dargestellter Weise in pneumatisch beaufschlagten Förderleitungen das sich in der Vorratsbehältereinheit 4 befindliche Material in einstellbaren Mengen ein. Über diese pneumatisch beaufschlagten Förderleitungen wird das Material den auf dem Tragbalken 6 angeordneten und auf Steigrohren 9 als Verteiler ausgebildeten Verteilerköpfen 10 zugeleitet. Von den Verteilerköpfen 10 aus wird das Material auf einzelne, nicht dargestellte Saatleitungen in gleichen Mengen aufgeteilt und den Säscharen 8, von denen nur einige dargestellt sind, zugeleitet. Die Steigrohre 9 sind jeweils um eine quer zur Fahrtrichtung 7 verlaufende Achse mittels einer Gelenkanordnung 11 an dem Tragbalken 6 schwenkbar befestigt. In der in den Fig. 1 und 2 dargestellten Arbeitsposition sind die Steigrohre 9 aufrecht stehend angeordnet.

Zwischen dem Tragbalken 6 und dem jeweiligen Steigrohr ist ein als elektrischer Stellmotor 12 ausgebildetes motorisches Stellelement angeordnet. Mittels dieses jeweiligen Stellmotors 12 wird das jeweilige Steigrohr 9 in der Fig. 1 und 2 dargestellten Arbeitsposition fixiert.

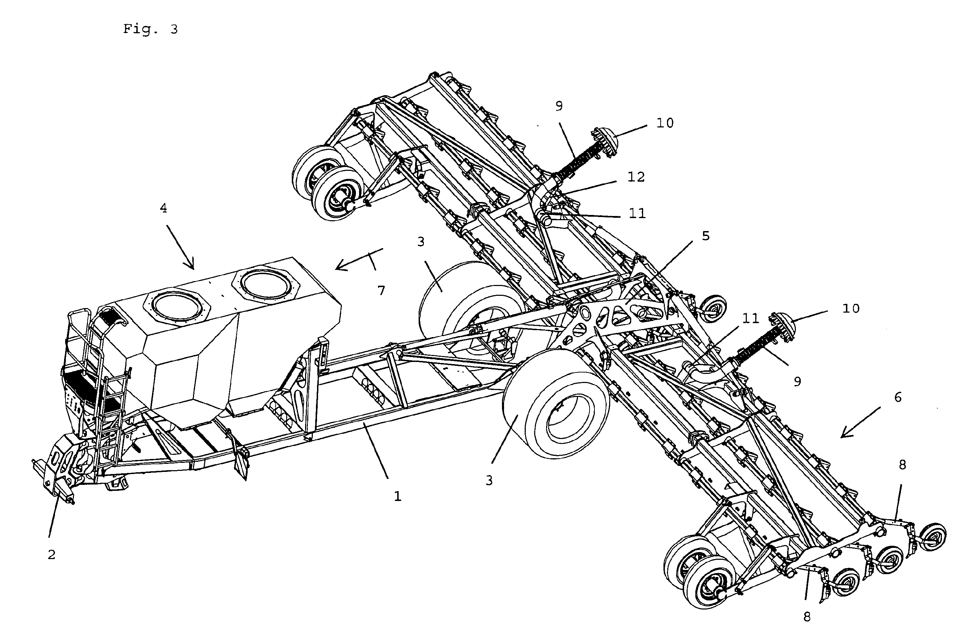

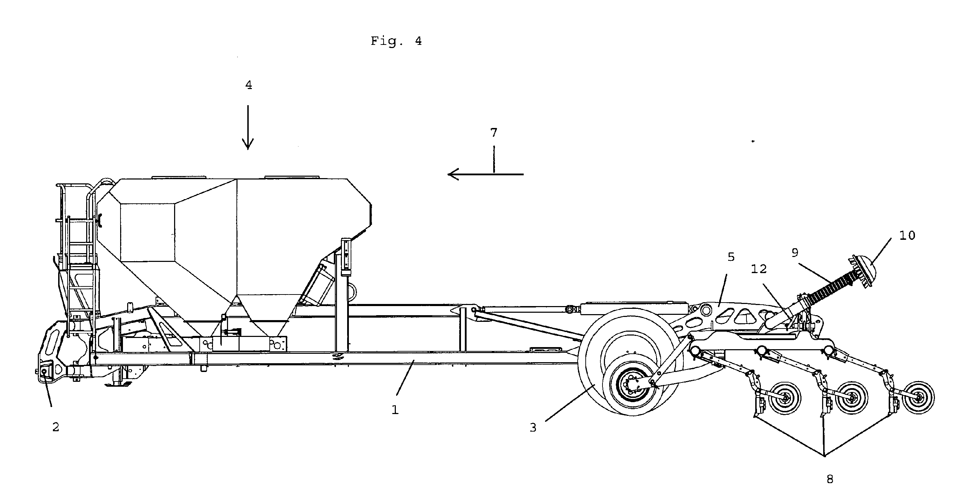

Aufgrund der Gelenkanordnung 11, mit der das Steigrohr 9 an dem Tragbalken 10 angeordnet ist, ist das Steigrohr 9 mit dem Verteilerkopf 10 um eine quer zur Fahrtrichtung 7 verlaufende Achse in die in den Fig. 3 und 4 dargestellte Wartungsposition zu verschwenken. Somit ist das jeweilige Steigrohr 9 mit dem Verteilerkopf derart schwenkbar an dem Tragbalken 6 angeordnet, dass der Verteilerkopf 10, in Fahrtrichtung 7 gesehen, zumindest teilweise in einen hinteren Bereich der Säschare 8 verschwenkbar ist und hier von einer hinter den oder im hinteren Bereich der Säschare 8 stehenden Person erreichbar ist. Hierzu ist der Verteilerkopf 10 mit dem Steigrohr 9 zumindest auf eine maximale Höhe von 2 m vom Boden nach hinten und unten verschwenkbar, wie Fig. 3 und 4 zeigen.

Durch noch weiteres Verschwenken, als in den Fig. 3 und 4 dargestellt, kann der Verteilerkopf 10 auch hinter die Sävorrichtungen 8 verschwenkt werden.

## Patentansprüche

1. Pneumatische Verteilmaschine mit einem Rahmen, Vorratsbehälter, dem Vorratsbehälter zugeordneten Dosiervorrichtungen, die das sich im Vorratsbehälter befindliche auszubringende Material in pneumatisch beaufschlagte und zu auf aufrecht stehend angeordneten Steigrohren angeordneten Verteiler führende Förderleitungen einspeisen, wobei die Steigrohre mit dem Verteiler auf Tragbalken der Verteilmaschine um eine quer zur Fahrtrichtung verlaufende Achse verschwenkbar angeordnet sind, wobei von den Verteilern Verteilerleitungen zu an Querbalken angeordneten Materialablageeinrichtungen führen, **dadurch gekennzeichnet, dass** das Steigrohr (9) mit den Verteilern (10) derart verschwenkbar ist, dass sich zumindest der Verteiler (10) in Fahrtrichtung (7) gesehen zumindest teilweise sich im hinteren Bereich der Materialablageeinrichtungen (8) und/oder hinter den Materialablageeinrichtungen (8) befindet und/oder von einem hinter dem Materialablageeinrichtungen (8) stehenden Person erreichbar ist.

2. Verteilmaschine nach Anspruch 1, **dadurch gekennzeichnet, dass** der Verteiler (10) mit dem Steigrohr (9) auf eine maximale Höhe von 2 m zum Boden nach hinten und unten verschwenkbar ist.

3. Verteilmaschine nach einem oder mehreren der vorstehenden Ansprüche, **dadurch gekennzeichnet, dass** das Steigrohr (9) mit dem Verteiler (10) mit einem motorischen Stellelement (12) verschwenkbar ist.
